# EUROPÄISCHE PATENTSCHRIFT

(11) **EP 2 260 224 B1**
(45) Veröffentlichungstag und Bekanntmachung des Hinweises auf die Patenterteilung: **14.12.2011**
(21) Anmeldenummer: 09738064.6
(22) Anmeldetag: 24.04.2009
(51) Int. Cl.: F16L 5/02

(54) **ANSCHLUSSVORRICHTUNG FÜR MEDIENLEITUNGEN IM BEREICH EINER WANDUNGSDURCHFÜHRUNG SOWIE WANDUNGSELEMENT**
CONNECTION DEVICE FOR FLUID LINES IN THE REGION OF A WALL DUCT AND WALL ELEMENT
DISPOSITIF DE RACCORDEMENT POUR CONDUITS DE FLUIDES DANS LA ZONE D'UNE TRAVERSÉE DE CLOISON ET ÉLÉMENT DE CLOISON

(30) Priorität: 29.04.2008 DE 202008005929 U
(43) Veröffentlichungstag der Anmeldung: 15.12.2010
(73) Patentinhaber: Voss Automotive GmbH, 51688 Wipperfürth (DE)
(72) Erfinder: BRANDT, Josef, 51688 Wipperfürth (DE); ROSENFELDT, Sascha, 44137 Dortmund (DE); HILTEMANN, Ulrich, 42929 Wermelskirchen (DE); LECHNER, Martin, 51789 Lindlar (DE)
(74) Vertreter: Patentanwälte Dr. Solf & Zapf
(86) Internationale Anmeldenummer: PCT/EP2009/054930
(87) Internationale Veröffentlichungsnummer: WO 2009/133020

(56) Entgegenhaltungen:
- DE-A1- 2 951 395
- DE-A1- 4 233 167
- DE-A1- 10 332 035

## Beschreibung

Die vorliegende Erfindung betrifft zunächst eine Anschlussvorrichtung gemäß dem Oberbegriff des Anspruchs 1 sowie ferner ein dafür vorgesehenes Wandungselement gemäß dem Oberbegriff des Anspruchs 22,

Die DE 29 51 395 A1/C2 beschreibt eine solche Befestigungsarmatur für Wanddurchführungen, wobei ein Anschlussteil (so genannter Schottstecker) von einer Seite der Wandung her bis zur Anlage eines Anschlagflansches in eine Öffnung einer Wandung eingesetzt und mit Haltemitteln arretiert wird. Dabei sind die Haltemittel als separate Teile auf der anderen Seite der Wandung durch Aufstecken auf den ersten Anschlussabschnitt zu montieren, was aber je nach Einbausituation problematisch sein kann, weil von zwei Seiten gleichzeitig und deshalb ggf. von zwei Personen montiert werden muss.

Ähnliches gilt auch für einen in der DE 42 34 262 A1 beschriebenen Durchführungsverbinder, bei dem auf der Seite des ersten, durch die Wandungsöffnung geführten Abschnittes ein Federelement mittels einer Schraubmutter zu montieren

Auch das weitere Dokument DE 42 33 167 A1 beschreibt eine Anschlussvorrichtung gemäß dem Oberbegriff des Anspruchs 1. Der bekannte Leitungsverbinder besteht offensichtlich einstückig aus zwei zylinderförmigen Anschlussstücken, wobei eines der Anschlussstücke durch eine Halteöffnung einer Spritzwand bzw. eines Schließbleches zu führen ist, bis ein Bund zur einsetzbegrenzenden Anlage am Öffnungsrand kommt. Als Haltemittel zur Arretierung des so eingesetzten Verbinders ist ein Befestigungsblech vorgesehen, welches in eine Nut des Verbinders so eingreift, dass das Befestigungsblech 15 mit federelastischer Vorspannung zwischen der Nut und dem Schließblech sitzt.

Der vorliegenden Erfindung liegt die Aufgabe zu Grunde, eine Anschlussvorrichtung der beschriebenen Art zu schaffen, die bei konstruktiv und fertigungstechnisch einfacher Ausgestaltung verbesserte Gebrauchseigenschaften gewährleistet.

Erfindungsgemäß wird dies durch die Merkmale des Anspruchs 1 erreicht. Vorteilhafte Ausgestaltungsmerkmale sind in den davon abhängigen Ansprüchen enthalten.

Demnach ist erfindungsgemäß vorgesehen, dass das Anschlussteil aus mindestens zwei separaten Teilen besteht, und zwar einem Montageteil zur Halterung in der Durchführöffnung des Wandungselementes über die Haltemittel und einem mit dem Montageteil verbindbaren, die Anschlussabschnitte aufweisenden Verbinderteil. Somit kann zunächst nur das Montageteil - unabhängig von dem Verbinderteil - in der Wandungs-Durchführöffnung montiert werden, wozu das Montageteil das einsetzbegrenzende Anlageelement und die Haltemittel aufweist. Nachfolgend kann dann das Verbinderteil mit dem vormontierten Montageteil verbunden werden. Dies ist besonders einfach und schnell durchführbar, wenn das Verbinderteil mit einem Steckabschnitt in eine Aufnahmeöffnung des Montageteils einsteckbar und über Haltemittel gegen Lösen arretierbar ist. Alternativ kann nach Belieben auch erst das Verbinderteil mit dem Montageteil verbunden und dann das Montageteil gemeinsam mit dem Verbinderteil in der Wandungsöffnung befestigt werden.

In einer vorteilhaften Ausführung kann das Verbinderteil nochmals in mehrere, insbesondere zwei separate Teile unterteilt sein, von denen jedes einen der Anschlussabschnitte aufweist. Die zwei Verbinder-Einzelteile können von gegenüberliegenden Seiten in das Montageteil eingesetzt und miteinander über eine Steckverbindung verbunden werden.

Durch die erfindungsgemäße Mehrteil igkeit des Anschlussteils kann jedes Einzelteil optimal für seine jeweilige Aufgabe ausgelegt sein. So kann mit Vorteil das Montageteil als Formteil aus Kunststoff ausgebildet sein, wobei die Haltemittel zum Arretieren des Anschlussteils in der Durchführöffnung des Wandungselementes von Rastmitteln des Montageteils gebildet sind, die derart durch die Durchführöffnung hindurch führbar sind, dass sie das Wandungselement zum Arretieren selbsttätig rastend hintergreifen. Die Rastmittel bestehen vorzugsweise aus mindestens zwei elastischen Rastarmen, die nach Art von Widerhaken beim Einsetzen in und Durchführen durch die Durchführöffnung elastisch nach innen bewegt werden und anschließend mit ihren freien, entgegen der Einsetzrichtung weisenden Enden nach außen zurückfedern und dadurch das Wandungselement auf seiner dem Anlageelement gegenüberliegenden Seite rastend hintergreifen. Durch diese bevorzugte Ausgestaltung ist vorteilhafterweise die Montage bzw. Vormontage des Montageteils durch einfaches Einsetzen von einer Seite des Wandungselementes aus möglich. Es brauchen keine Halteelemente von der anderen Seite her montiert zu werden, weil die Rastmittel bzw. Rastarme beim Einsetzen selbsttätig die Wandung im Randbereich der Durchführöffnung entgegen der Einsetzrichtung formschlüssig hintergreifen. Auch die anschließende Montage des Verbinderteils ist sehr schnell und einfach durchführbar, indem es einfach in das vormontierte Montageteil eingesteckt zu werden braucht.

Auf Grund der Mehrteiligkeit können zudem die Bestandteile aus beliebigen, gleichen oder aber verschiedenen Materialien bestehen. So kann es sich auch um eine so genannte "Hybrid-Ausbildung" handeln, wobei das Montageteil bevorzugt aus Kunststoff und das Verbinderteil zumindest teilweise aus Metall, insbesondere einem Buntmetall wie Messing, bestehen.

In weiterer vorteilhafter Ausgestaltung kann das Anschlussteil bzw. das Verbinderteil als Durchgangsverbinder für zwei an den Anschlussabschnitten angeschlossene bzw. anschließbare Medienleitungen konzipiert sein. Alternativ dazu kann es sich mit Vorteil auch um einen bedarfsweise verwendbaren Wartungsanschluss handeln, wie beispielsweise einen so genannten Prüfanschluss, insbesondere zur Druckmessung, oder einen Befüllanschluss zum Zuführen oder Entnehmen eines Mediums. Dabei ist einer der Anschlussabschnitte zum Anschluss einer Wartungs- oder Messleitung ausgebildet, wobei vorzugsweise zwischen den Anschlussabschnitten innerhalb des Verbinderteils ein Rückschlagventil angeordnet ist.

Gemäß einem Teilaspekt der Erfindung sind das erfindungsgemäße Montageteil und ein mindestens eine Durchführöffnung aufweisendes Wandungselement derart aneinander angepasst, dass einerseits eine gegen Verdrehen gesicherte Halterung des Montageteils in der Durchführöffnung erreicht wird. Andererseits kann das Montageteil in mehreren unterschiedlichen Drehausrichtungen in die Durchführöffnung eingesetzt werden. Dies ist insbesondere im Falle einer Ausgestaltung des Verbinderteils als so genanntes Winkelstück von Vorteil, und zwar zur Richtungseinstellung des jeweiligen Leitungsabganges. Dabei sollte auch die Verbindung zwischen Verbinderteil und Montageteil gegen relative Verdrehungen gesichert sein.

Dementsprechend bezieht sich die Erfindung auch auf ein entsprechend angepasstes Wandungselement gemäß dem Anspruch 22.

Anhand von in der Zeichnung veranschaulichten, bevorzugten Ausführungsbeispielen sollen die Erfindung, vorteilhafte Ausgestaltungen und erreichte Vorteile genauer erläutert werden. Dabei zeigen:
- Fig. 1 bis 3: jeweils eine Perspektivansicht einer ersten Ausführungsform einer erfindungsgemäßen Anschlussvorrichtung aus verschiedenen Blickrichtungen,
- Fig. 4: eine teilweise aufgeschnittene Perspektivansicht der Anschlussvorrichtung unter Weglassung einer Schutzkappe,
- Fig. 5: eine weitere aufgeschnittene Perspektivansicht der Anschlussvorrichtung mit Schutzkappe,
- Fig. 6: eine vergrößerte Seitenansicht der Anschlussvorrichtung gemäß Fig. 1 bis 5,
- Fig. 7: einen Längsschnitt in der Ebene VII-VII gemäß Fig. 6,
- Fig.8: eine perspektivische Explosionsdarstellung der wesentlichen Einzelteile der Anschlussvorrichtung gemäß Fig. 1 bis 7,
- Fig. 9: eine Ausführungsvariante der Anschlussvorrichtung in Perspektivansicht,
- Fig. 10: die Anschlussvorrichtung gemäß Fig. 9 in einem montierten Zustand mit einem Teil eines Wandungselementes,
- Fig.11: einen Längsschnitt analog zu Fig. 7 einer weiteren Ausführungsvariante der Anschlussvorrichtung in einem montierten, in ein Wandungselement eingesetzten Zustand und mit einer einseitig angeschlossenen Medienleitung,
- Fig. 12: eine perspektivische Explosionsdarstellung analog zu Fig. 8 in einer weiteren Ausführungsvariante der erfindungsgemäßen Anschlussvorrichtung,
- Fig. 13 u.14: jeweils eine weitere Ausführungsvariante der Anschlussvorrichtung, wiederum in perspektivischen Explosionsansichten, und
- Fig. 15: eine Abwandlung zur Ausführung nach Fig. 9 und 10.

In den verschiedenen Figuren der Zeichnung sind gleiche Teile und Komponenten stets mit den gleichen Bezugszeichen versehen.

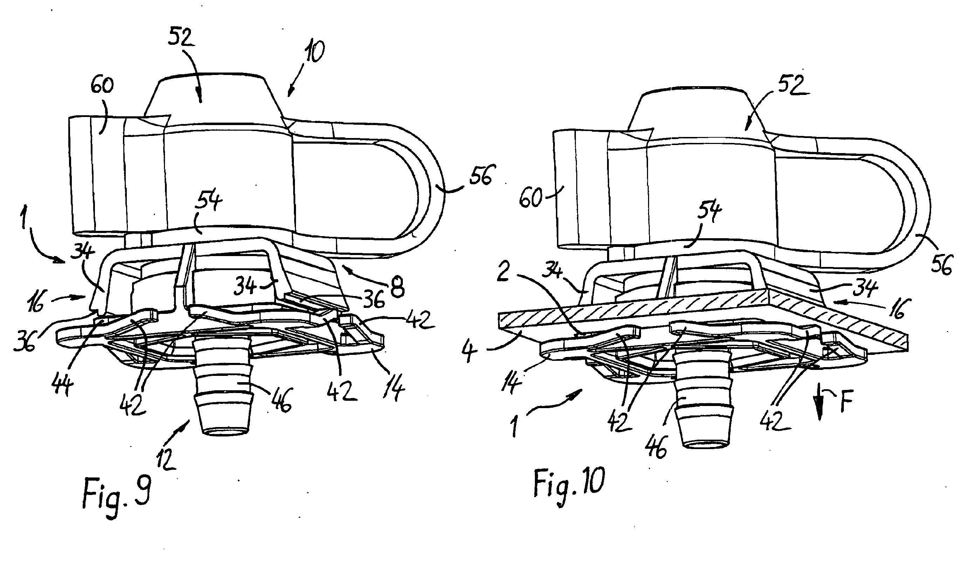

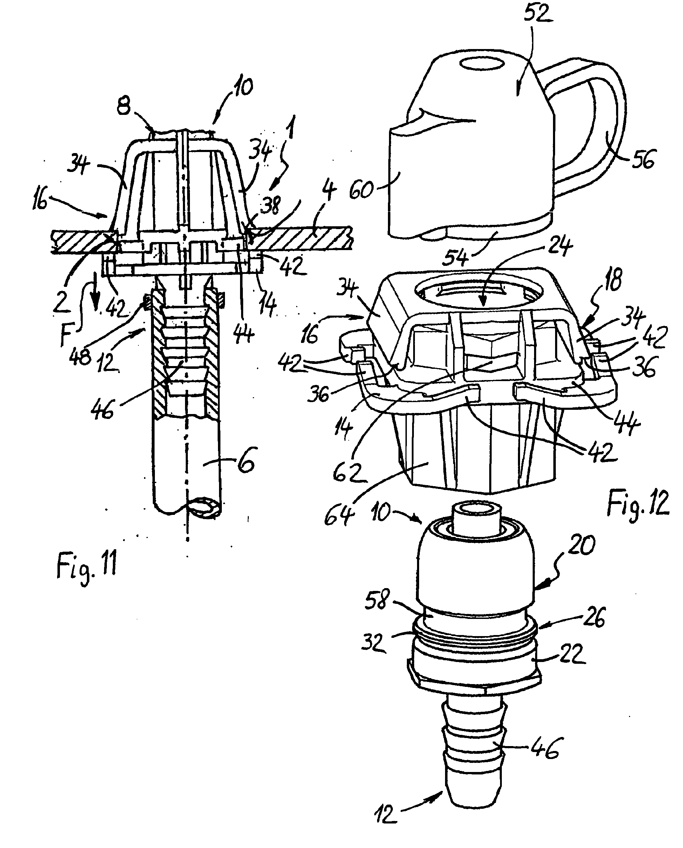

Eine erfindungsgemäße Anschlussvorrichtung 1 ist zur vorzugsweise abgedichteten Anordnung in einer Durchführöffnung 2 eines Wandungselementes 4 (s. Fig. 10 und 11) und dabei zum Anschluss von mindestens einer Medienleitung 6 konzipiert (nur in Fig. 11 dargestellt). Bei dem Wandungselement 4 handelt es sich insbesondere um eine so genannte Schottwand in einem Fahrzeug, beispielsweise in einem Lastkraftwagen. Bei der/jeder Medienleitung 6 kann es sich um eine Schlauch- oder Rohrleitung für beliebige, pneumatische oder hydraulische Strömungs- bzw. Druckmedien handeln.

Die Anschlussvorrichtung 1 besteht aus einem Anschlussteil 8 (auch Schottstecker genannt) mit einem ersten, durch die Durchführöffnung 2 führbaren Anschlussabschnitt 10 und einem zweiten Anschlussabschnitt 12 mit einem flanschartigen Anlageelement 14 zur einsetzbegrenzenden Anlage an dem Wandungselement 4 in einem die Durchführöffnung 2 umschließenden Anlagebereich. Weiterhin sind Haltemittel 16 zum Arretieren des Anschlussteils 8 in seiner in die Durchführöffnung 2 eingesetzen Montagelage vorgesehen (s. Fig. 10 und 11).

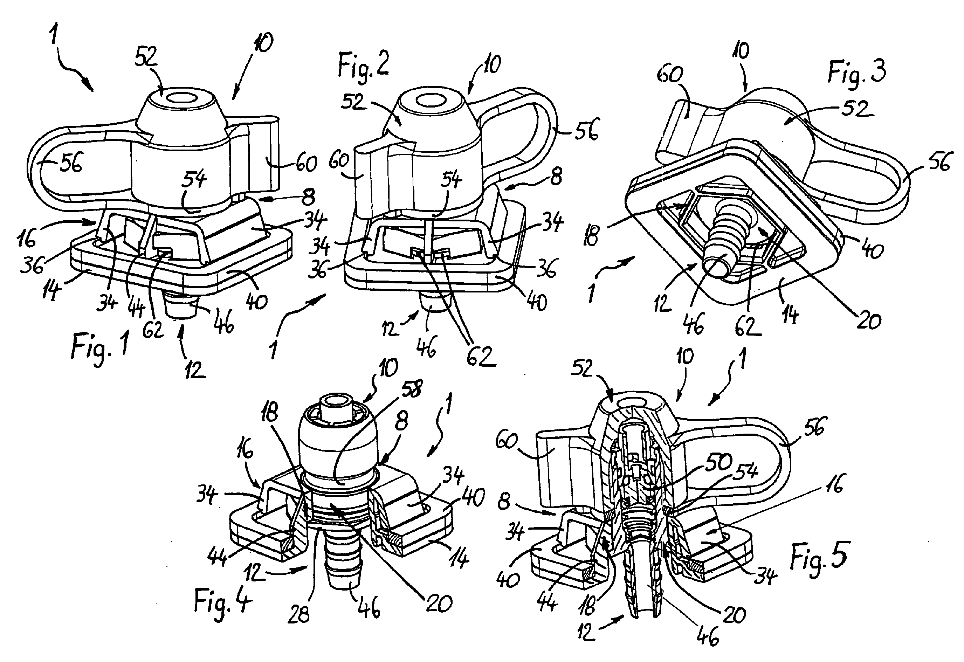

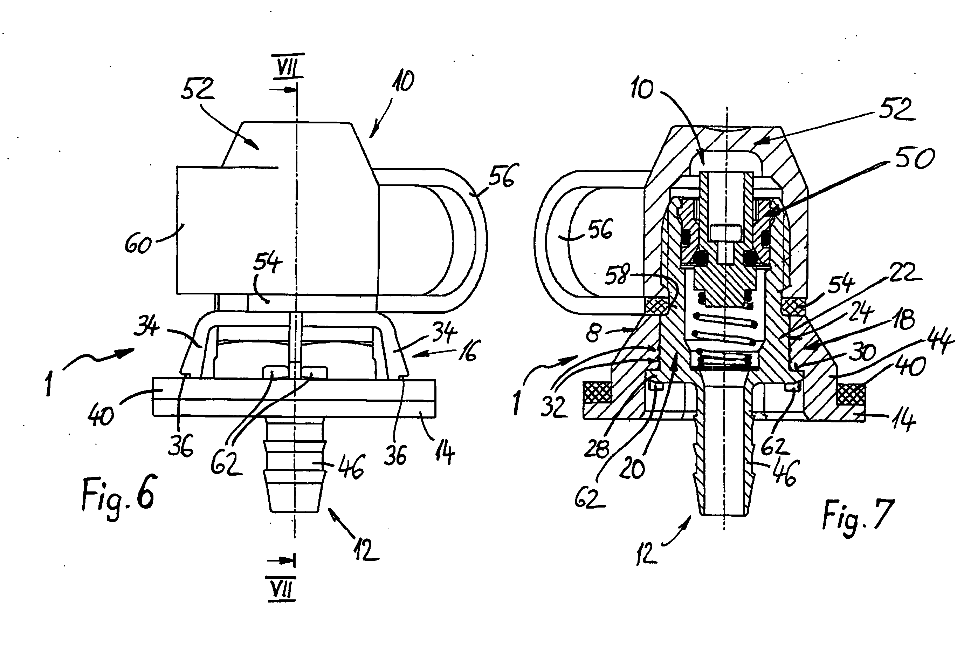

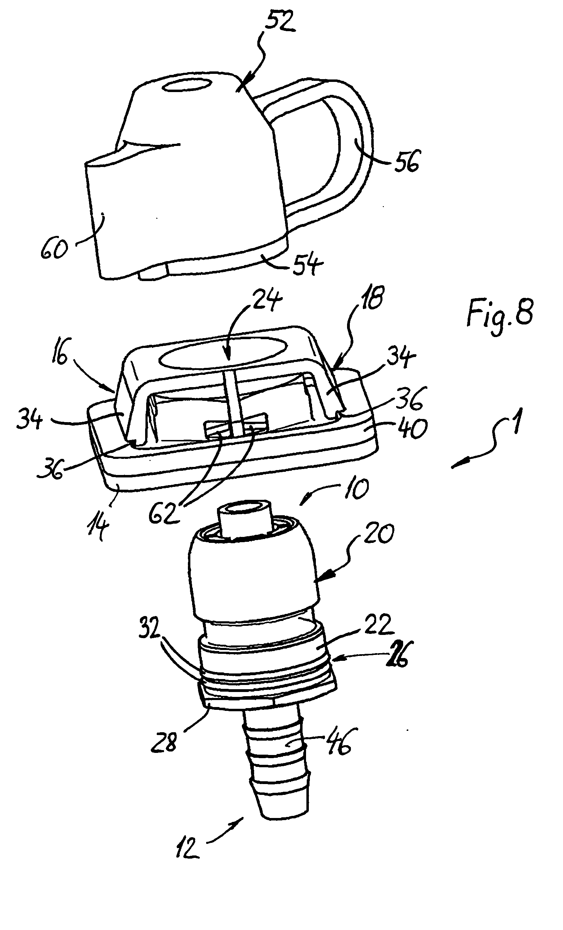

Erfindungsgemäß besteht das Anschlussteil 8 aus mindestens zwei separaten Teilen, und zwar - siehe dazu insbesondere Fig. 4, 5, 7, 8 und 12 - einem Montageteil 18 zur Halterung in der Durchführöffnung 2 des Wandungselementes 4 und einem mit dem Montageteil 18 verbindbaren, die Anschlussabschnitte 10, 12 aufweisenden Verbinderteil 20. Das Montageteil 18 weist das Anlageelement 14 und die Haltemittel 16 auf. Zweckmäßig ist das Verbinderteil 20 mit einem Steckabschnitt 22 in eine Aufnahmeöffnung 24 des Montageteils 18 einsteckbar und über Haltemittel 26 gegen Lösen arretierbar. Der Steckabschnitt 22 und die Aufnahmeöffnung 24 sind bevorzugt mit kreisförmigen Querschnitten ausgebildet, wobei die Aufnahmeöffnung 24 als zentrische, axiale Durchgangsöffnung in dem Montageteil 18 gebildet ist. Somit kann zunächst nur das Montageteil 18 in die Durchführöffnung 2 des Wandungselementes 4 eingesetzt und dort befestigt (vormontiert) werden. Nachfolgend braucht nur das Verbinderteil 20 in die Aufnahmeöffnung 24 des Montageteils 18 eingesteckt zu werden (allerdings kann dies auch schon vor dem Einsetzen des Montageteils erfolgen). Dieses Einstecken wird begrenzt, indem das Verbinderteil 20 mit einem radial nach außen vorspringenden Steg 28 zur Anlage an einer inneren radialen Ringstufe 30 des Montageteils 18 gelangt (s. insbesondere Fig. 7 sowie auch Fig. 4 und 5). Als Haltemittel 26 weist bevorzugt das Verbinderteil 20 auf seiner Außenumfangsfläche im Bereich des Steckabschnittes 22 mindestens eine über den Umfang verlaufende, kraft- und/oder formschlüssig in die innere Umfangsfläche der Aufnahmeöffnung 24 des Montageteils 18 eingreifende Zahnkante 32 auf. Wie sich insbesondere aus Fig. 7 ergibt, sind bevorzugt zwei axial beabstandete Zahnkanten 32 vorgesehen. Grundsätzlich ist dies aber - als Art "kinematische Umkehr" - auch umgekehrt möglich (Zahnkante(n) in der Aufnahmeöffnung 24 und bevorzugt korrespondierende Haltenut am Verbinderteil 20). Zudem kann das Verbinderteil 20 auch einen von der Kreisform abweichenden, z. B. polygonalen Querschnitt aufweisen. Entsprechendes gilt dann auch für die Aufnahmeöffnung 24.

Zur Befestigung des Anschlussteils 8 in der Wandungs-Durchführöffnung 2 weist das Montageteil 18 als Haltemittel 16 geeignete Rastmittel - insbesondere in Form von mindestens zwei federelastischen Rastarmen 34 - auf, die derart ausgebildet sind, dass sie durch die Durchführöffnung 2 hindurch führbar sind und dann das Wandungselement 4 zum Arretieren selbsttätig rastend hintergreifen. Hierzu sind die Rastarme 34 einendig insbesondere einstückig mit dem Montageteil 18 verbunden, und zwar in einem von dem Anlageelement 14 axial beabstandeten Bereich, von dem aus sie sich mit ihren freien Enden entgegen der Einsetzrichtung zurück in Richtung des Anlageelementes 14 und dabei - nach Art von Widerhaken - derart etwas schräg nach außen erstrecken, dass sie beim Einsetzen über den inneren Öffnungsrand der Durchführöffnung 2 selbsttätig elastisch nach innen bewegt werden, bis sie auf der anderen Seite des Wandungselementes 4 freikommen und nach außen zurückfedern können und dadurch mit den freien Enden den Öffnungsrand rastend formschlüssig hintergreifen (s. insbesondere Fig. 11).

In vorteilhafter Ausgestaltung sind Sicherungsmittel zum Fixieren der Rastarme 34 gegen eine elastische Lösebewegung vorgesehen. Hierbei kann es sich um separate, in der Zeichnung nicht dargestellte Elemente handeln, die z. B. jeweils in einen radial zwischen dem Verbinderteil 20 und jedem Rastarm 34 gebildeten Spalt einführbar sind. In den dargestellten, bevorzugten Ausführungen weisen aber die Rastarme 34 als Sicherungsmittel an ihren freien Enden jeweils eine nut- oder rillenartige Kontur 36 zum rastenden Zusammenwirken mit einer Randkante 38 der Durchführöffnung 2 zum Zwecke einer Abstützung in axialer und radialer Richtung auf. Hierzu wird auf die Figur 11 verwiesen.

In Verbindung damit ist es vorteilhaft, wenn Vorspannmittel zum Erzeugen einer axial, entgegen der Einsetzrichtung wirkenden Vorspannkraft F (s. Fig. 10 und 11) derart vorhanden sind, dass das Anschlussteil 8 axial spielfrei gehalten wird und die Rastarme 34 in Anlage an den Randkanten 38 der Durchführöffnung 2 gehalten werden. Hierzu wird zunächst auf die Ausführungen gemäß Fig. 1 bis 8 verwiesen, wonach als Vorspannmittel bevorzugt eine elastische Axial-Dichtung 40 zur dichtenden Anlage im Bereich zwischen dem Anlageelement 14 und dem Wandungselement 4 vorgesehen ist. Alternativ oder zusätzlich ist auch eine Radialdichtung möglich (nicht dargestellt), die so angeordnet ist, dass sie mit dem inneren Bereich der Durchführöffnung 2 dichtend zusammenwirkt. Insbesondere in Kombination mit einer Radialdichtung kann gemäß Fig. 9 bis 12 mindestens ein Axial-Federelement vorgesehen sein, welches als separates Element, vorzugsweise aber von einstückig mit dem Montageteil 18 verbundenen, elastischen Armabschnitten 42 gebildet sein kann, die auf der Unterseite mit Vorspannung an dem Wandungselement 4 zur Anlage kommen (Fig. 10). Grundsätzlich kann auch im Falle einer Axial-Dichtung 40 ein zusätzliches Axial-Federelement eingesetzt werden.

Vorteilhaft ist weiterhin eine Ausgestaltung der Anschlussvorrichtung 1 zur gegen Verdrehen gesicherten Anordnung des Anschlussteils 8 in der Durchführöffnung 2 des Wandungselementes 4. Hierzu weist einerseits die Durchführöffnung 2 eine von der Kreisform abweichende, insbesondere als regelmäßiges Polygon ausgebildete Form auf. Andererseits weist das Montageteil 18 auf der in Richtung des ersten Anschlussabschnittes 10, d. h. in Einsetzrichtung weisenden Seite des Anlageelementes 14 einen Eingriffabschnitt 44 mit einer derart an die Form der Durchführöffnung 2 angepassten Ausgestaltung auf, dass der Eingriffabschnitt 44 mit geringem Spiel in die Durchführöffnung 2 einsetzbar, darin aber nicht verdrehbar ist. Zudem ist vorteilhafterweise ein Einsetzen in unterschiedlichen Dreh-Ausrichtungen möglich. Dies ist von Vorteil für winkelige Leitungsabgänge zur Richtungseinstellung. Im dargestellten Ausführungsbeispiel weist die Durchführöffnung 2 eine regelmäßige Viereckform, d. h. eine quadratische Form auf, so dass das Montageteil 18 in vier verschiedenen Winkelausrichtungen jeweils um 90° versetzt einsetzbar ist. Alternativ dazu kann die Durchführöffnung 2 aber beispielsweise auch regelmäßig sechs- oder achteckig ausgebildet sein. Bevorzugt weist das Montageteil 18 hierbei zwei (nur zwei) einander diametral gegenüberliegende Rastarme 34 auf, die mit einer relativ großen Breite derart ausgebildet sind, dass die freien Enden Haltekanten bilden, die nahezu die gleiche Länge wie die dazu parallelen Randkanten 38 der Durchführöffnung 2 aufweisen. Hierdurch wird vorteilhafterweise eine hohe Sicherheit gegen Verkippen des Anschlussteils 8 bzw. des Montageteils 18 innerhalb der Durchführöffnung 2 erreicht.

Vorteilhafterweise besteht das Montageteil 18 aus einem Formteil insbesondere aus faserverstärktem Kunststoff. Besonders zweckmäßig ist eine einstückige Herstellung als Spritzformteil. Dabei ist auch eine Herstellung des Montageteils 18 als Mehrkomponenten-Formteil aus verschiedenen Kunststoffen möglich. Hierdurch kann insbesondere die Dichtung 40 aus einem elastischen Material einstückig angeformt werden. Bei einer gesonderten Ausgestaltung der Dichtung 40 kann diese beispielsweise aus Moosgummi oder Zellgummi bestehen und eine rahmenartige, eventuell auch ringförmige Kontur aufweisen.

Das Verbinderteil 20 kann entweder ebenfalls aus Kunststoff, bevorzugt aber aus Metall, insbesondere einem Buntmetall, wie Messing, bestehen. Dies ist für die Befestigung des Verbinderteils 20 in der Aufnahmeöffnung 24 des Montageteils 18 von besonderem Vorteil, weil sich die bevorzugt vorhandenen Zahnkanten 32 sehr fest und praktisch unlösbar in das Kunststoffmaterial des Montageteils 18 verkrallen (einschneiden).

Das Verbinderteil 20 weist zumindest im Bereich des zweiten Anschlussabschnittes 12 einen Leitungsanschluss 46 in beliebiger Ausgestaltung und Ausrichtung auf. Wie beispielhaft dargestellt ist, kann es sich bei dem Leitungsanschluss 46 um ein übliches Domprofil zum Aufstecken einer Leitung 6 handeln (s. hierzu Fig. 11), wobei zur Fixierung zusätzlich eine Spannschelle 48 vorgesehen sein kann. Die Leitung 6 kann bereits vor Montage des Anschlussteils 8 angeschlossen (aufgedornt) sein, und das Einsetzen des Anschlussteils 8 in die Durchführöffnung 2 - bzw. das Einsetzen des Verbinderteils 20 in das vormontierte Montageteil 18 - kann vorteilhafterweise mit angeschlossener Leitung 6 erfolgen.

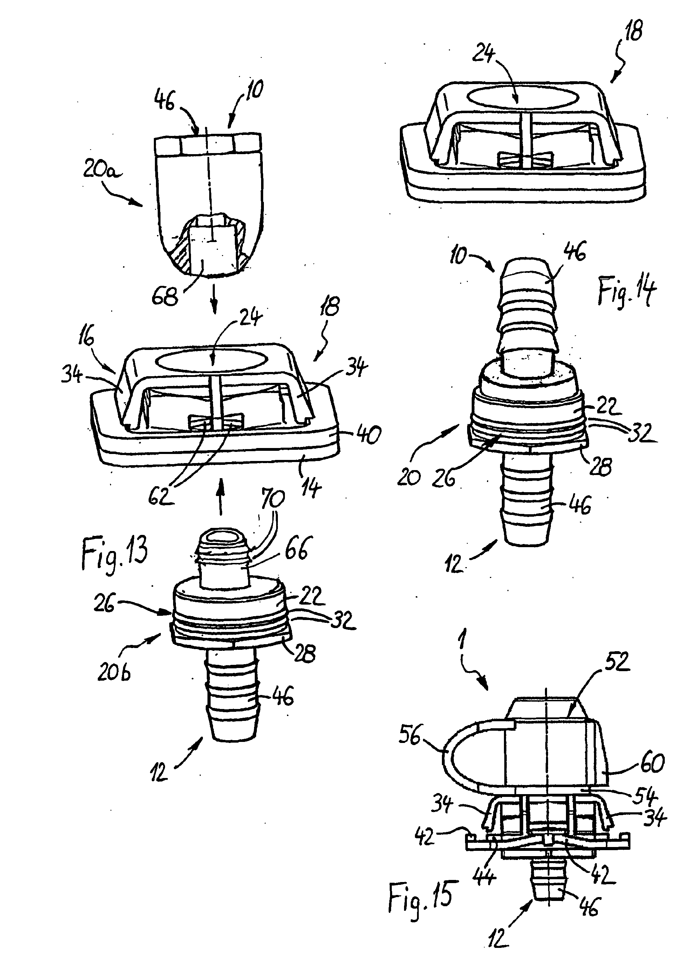

Das Anschlussteil 8 bzw. das Verbinderteil 20 kann in beispielhaft in Fig. 13 und 14 dargestellten Ausführungen als Medien-Durchgangsverbinder ausgebildet sein, wobei die Anschlussabschnitte 10, 12 permanent über einen inneren Kanal des Verbinderteils 20 verbunden sind. Dabei weist auch der erste Anschlussabschnitt 10 einen Leitungsanschluss 46 auf, der gemäß Fig. 13 bevorzugt als Teil eines Stecksystems, und zwar insbesondere als Aufnahmemuffe zum Einstecken eines mit einer Leitung verbundenen, nicht dargestellten Steckerteils ausgebildet sein kann. Gemäß Fig. 14 sind beide Leitungsanschlüsse 46 als Domprofile zum Aufstecken jeweils einer Leitung ausgebildet. Zwischen den einzelnen Leitungsanschlüssen 46 kann ein beliebiger, einoder mehrdimensionaler Richtungsversatz vorgesehen sein (vgl. in Fig. 14 den winklig ausgerichteten "oberen" Leitungsanschluss 46 des ersten Anschlussabschnittes 10).

In den übrigen dargestellten Ausführungen (Fig. 1 bis 12 und 14) ist die Anschlussvorrichtung 1 bzw. das Anschlussteil 8 als Wartungsanschluss, z. B. Prüfanschluss insbesondere zur Druckmessung, ausgebildet. An einem der Anschlussabschnitte, wie dargestellt vorzugsweise an dem zweiten Anschlussabschnitt 12, kann eine druckführende Medienleitung 6 angeschlossen werden. Der andere, wie dargestellt bevorzugt der erste Anschlussabschnitt 10, ist z. B. zum Anschluss einer zu einem Druckmessgerät führenden Messleitung ausgebildet. Die Messleitung und das Messgerät sind in der Zeichnung nicht dargestellt. Zwischen den Anschlussabschnitten 10, 12 ist innerhalb des Verbinderteils 20 ein Rückschlagventil 50 angeordnet. Hierzu wird auf Fig. 5 und 7 verwiesen. Dieses Rückschlagventil 50 ist - nach Art eines Luftreifen-Füllventils - so ausgebildet, dass mit nicht angeschlossener Messleitung die am zweiten Anschlussabschnitt 12 angeschlossene Medienleitung durch ihren Druck selbsttätig in Richtung der Anschlussseite für die Messleitung verschlossen wird, und dass durch einen Anschluss der Messleitung das Rückschlagventil 50 selbsttätig gegen den Druck geöffnet wird, so dass dann der Druck über die Messleitung zu dem Messgerät gelangt. In einer entsprechenden Weise kann über den Wartungsanschluss und eine dort bedarfsweise anschließbare Wartungsleitung (z. B. Füll-Leitung) auch ein Medium zugeführt oder abgelassen werden.

In vorteilhafter Ausgestaltung ist bei diesen Ausführungen der erste Anschlussabschnitt 10 mit einer Schutzkappe 52 ausgestattet, um den Wartungsanschluss auf seiner Anschlussseite vor Schmutz und sonstigen Einflüssen zu schützen. Wie beispielhaft in Fig. 5 und 7 angedeutet ist, kann die Schutzkappe 52 als Schraubkappe ausgebildet sein, die mit einem Innengewinde auf ein Außengewinde des Anschlussabschnittes 10 des Verbinderteils 20 aufgeschraubt werden kann. In den übrigen Ausführungen wird die bevorzugt aus einem flexiblen, elastischen Kunststoff bestehende Schutzkappe 52 nur auf den Anschlussabschnitt 10 aufgesteckt und verrastet. Zur unverlierbaren Halterung an dem Anschlussteil 8 weist die Schutzkappe 52 einen Haltering 54 auf, der den Anschlussabschnitt 10 umschließt, wobei der Haltering 54 über einen flexiblen, band- oder schlaufenartigen Verbindungsabschnitt 56 einstückig mit der Schutzkappe 52 verbunden ist. Der Haltering 54, der zusätzlich auch als Dichtung zwischen der Schutzkappe 52 und dem Montageteil 18 fungieren kann (vgl. Fig. 5 und 7), kann in einer nutartigen Ringvertiefung 58 des Verbinderteils 20 sitzen (s. Fig. 4, 7 und 12). Um das Aufsetzen und Abnehmen der Schutzkappe 52 zu erleichtern, kann auf der dem Verbindungsabschnitt 56 diametral gegenüberliegenden Seite als Handhabe ein radialer Ansatz 60 angeordnet sein.

Wie sich weiterhin aus Fig. 1 bis 7 ergibt, ist in einer bevorzugten Ausgestaltung der Erfindung vorgesehen, dass der Leitungsanschluss 46 des zweiten Anschlussabschnittes 12 des Verbinderteils 20 bereichsweise derart versenkt innerhalb der Aufnahmeöffnung 24 des Montageteils 18 liegt, dass im montiert in der Durchführöffnung 2 des Wandungselementes 4 gehalterten Zustand des Anschlussteils 8 von der gegenüberliegenden Seite des Wandungselementes 4 her durch mindestens eine seitliche Sichtöffnung 62 des Montageteils 18 hindurch zumindest ein Fußbereich dieses Leitungsanschlusses 46 sichtbar ist. Diese Ausgestaltung ermöglicht vorteilhafterweise eine Montagekontrolle, um festzustellen, ob eine Medienleitung 6 korrekt und weit genug auf den Leitungsanschluss 46 aufgesteckt (aufgedomt) ist. Außerdem führt die versenkte Anordnung auch zu einer vorteilhaften Einsparung von Bauraum und Materialanteil des inneren Verbinderteils 20, was ein besonderer Vorteil bei der beschriebenen bevorzugten Ausbildung aus Metall, wie Messing, ist.

In einer weiteren, in Fig. 12 veranschaulichten Ausgestaltung weist das Montageteil 18 ein einstückig angeformtes Schutzelement 64 auf, welches den zweiten Anschlussabschnitt 12 bzw. den Leitungsanschluss 46 des Verbinderteils 20 in seitlicher Richtung koaxial wandungsartig mit seitlichem Abstand umschließt. Dieses Schutzelement 64 schützt den Leitungsanschluss 46 effektiv vor seitlichen Kräften und Beschädigungen, die im eingebauten Zustand am Montageort durch kollidierende Teile auftreten könnten.

Wie noch in Fig. 13 veranschaulicht ist, kann das Verbinderteil 20 nochmals in (mindestens) zwei Einzelteile 20a, 20b unterteilt sein, die jeweils einen der Anschlussabschnitte 10, 12 aufweisen und miteinander vorzugsweise über eine Steckverbindung verbunden oder verbindbar sind. Die Steckverbindung besteht aus einem Einsteckabschnitt 66 des einen Teils (z. B. 20b), der umfangsgemäß abgedichtet in eine Steckaufnahme 68 des anderen Teils (z. B. 20a) einsteckbar ist. Dazu werden die Teile 20a, 20b zweckmäßig von gegenüberliegenden Seiten her in die Aufnahmeöffnung 24 des Montageteils 18 eingeführt und zusammengesteckt. Zur Fixierung gegen Lösen können Haltemittel insbesondere in Form von mindestens einer Zahnkante 70 des Einsteckabschnittes 66 vorgesehen sein.

Bei der Ausführung gemäß Fig. 15 sind der Ansatz 60 und bevorzugt auch der Verbindungsabschnitt 56 der Schutzkappe 52 im Vergleich zu den übrigen Ausführungen derart verkleinert, dass das Anschlussteil 8 zusammen mit der aufgesetzten Schutzkappe 52 voran durch die Wandungs-Durchführöffnung 2 geführt werden kann.

Wie eingangs schon ausgeführt wurde, bezieht sich die Erfindung auch auf das Wandungselement 4 mit mindestens einer Durchführöffnung 2. Dabei ist erfindungsgemäß die Durchführöffnung 2 bezüglich ihrer Größe und Form derart ausgestaltet, dass das Montageteil 18 mit den Rastarmen 34 durch die Durchführöffnung 2 hindurch führbar ist. Wie ebenfalls schon erläutert wurde, weist die Durchführöffnung 2 des erfindungsgemäßen Wandungselementes 4 eine von der Kreisform abweichende, und zwar insbesondere als regelmäßiges Polygon ausgebildete Form derart auf, dass der Eingriffabschnitt 44 des Montageteils 18 mit geringem Spiel einsetzbar und im eingesetzten Zustand gegen Verdrehen gesichert ist. Zudem ist ein Einsetzen in unterschiedlichen Drehausrichtungen möglich.

Die Erfindung führt zu einer deutlichen Kosten- und Gewichtseinsparung im Vergleich zu früher bekannten, gänzlich metallischen und verschraubten Anschlüssen. Die Anschlussvorrichtung 1 ist auf einfache Weise manuell durch Einstecken montierbar und kann ebenfalls manuell oder mittels eines geeigneten Werkzeuges (Zange) durch Zusammendrücken der Rastarme 34 demontiert werden.

Die Erfindung ist nicht auf die dargestellten und beschriebenen Ausführungsbeispiele beschränkt, sondern umfasst auch alle im Sinne der Erfindung gleichwirkenden Ausführungen. So sind auch die Ansprüche lediglich als Formulierungsversuch für die Erfindung zu verstehen.

## Patentansprüche

1. Anschlussvorrichtung (1) für eine Wandungsdurchführung, insbesondere zur Anordnung in einer Durchführöffnung (2) eines Wandungselementes (4) und zum Anschluss von mindestens einer Medienleitung (6), bestehend aus einem Anschlussteil (8) mit einem ersten, durch die Durchführöffnung (2) hindurch zu führenden Anschlussabschnitt (10) und einem gegenüberliegenden zweiten Anschlussabschnitt (12) mit einem Anlageelement (14) zur einsetzbegrenzenden Anlage an dem Wandungselement (4) sowie mit Haltemitteln (16) zum Arretieren des Anschlussteils (8) in seiner in die Durchführöffnung (2) eingesetzten Montagelage,
**dadurch gekennzeichnet, dass** das Anschlussteil (8) aus, mindestens zwei separaten Teilen besteht, und zwar einem Montageteil (18) welches in der Durchführöffnung (2) des Wandungselementes (4) über die Haltemittel (16) befestigbar ist, und einem mit dem Montageteil (18) verbindbaren, die Anschlussabschnitte (10, 12) aufweisenden Verbinderteil (20), wobei die Haltemittel (16) von Rastmitteln des Montageteils (18) gebildet sind.

2. Anschlussvorrichtung nach Anspruch 1,
**dadurch gekennzeichnet, dass** das Verbinderteil (20) mit einem Steckabschnitt (22) in eine Aufnahmeöffnung (24) des Montageteils (18) einsteckbar und über Haltemittel (26) gegen Lösen arretierbar ist.

3. Anschlussvorrichtung nach Anspruch 2,
**dadurch gekennzeichnet, dass** das Verbinderteil (20) auf seiner Außenumfangsfläche als Haltemittel (26) mindestens eine über den Umfang verlaufende, kraft- und/oder formschlüssig in eine innere Umfangsfläche der Aufnahmeöffnung (24) des Montageteils (18) eingreifende Zahnkante (32) aufweist.

4. Anschlussvorrichtung nach einem der Ansprüche 1 bis 3,
**dadurch gekennzeichnet, dass** die die Haltemittel (16) bildenden Rastmittel des Montageteils (18) derart durch die Durchführöffnung (2) hindurch führbar sind, dass sie das Wandungselement (4) zum Arretieren selbsttätig rastend hintergreifen.

5. Anschlussvorrichtung nach einem der Ansprüche 1 bis 4,
**dadurch gekennzeichnet, dass** die Rastmittel des Montageteils (18) aus mindestens zwei elastischen Rastarmen (34) bestehen, die vorzugsweise so nach Art von Widerhaken ausgebildet sind, dass sie beim Einsetzen in und Durchführen durch die Durchführöffnung (2) elastisch nach innen bewegt werden und anschließend mit ihren freien, entgegen der Einsetzrichtung weisenden Enden nach außen zurückfedern und dadurch das Wandungselement (4) auf seiner dem Anlageelement (14) gegenüberliegenden Seite rastend hintergreifen.

6. Anschlussvorrichtung nach einem der Ansprüche 1 bis 5,
**gekennzeichnet durch** Sicherungsmittel zum Fixieren der Rastmittel (16) gegen eine Lösebewegung.

7. Anschlussvorrichtung nach Anspruch 5 und 6,
**dadurch gekennzeichnet, dass** die Rastarme (34) als Sicherungsmittel an ihren freien Enden jeweils eine nut- oder rillenartige Kontur (36) zum rastenden Zusammenwirken mit einer Randkante (38) der Durchführöffnung (2) zwecks Abstützung in axialer und radialer Richtung aufweisen.

8. Anschlussvorrichtung nach einem der Ansprüche 1 bis 7,
**gekennzeichnet durch** Vorspannmittel zum Erzeugen einer axial, zwischen Wandungselement (4) und Montageteil (18) entgegen der Einsetzrichtung wirkenden Vorspannkraft (F).

9. Anschlussvorrichtung nach einem der Ansprüche 1 bis 8,
**gekennzeichnet durch** eine elastische Dichtung (40) zur dichtenden Anlage im Bereich zwischen dem Anlageelement (14) und dem Wandungselement (4), wobei die Dichtung (40) vorzugsweise auch als Vorspannmittel zum Erzeugen der Vorspannkraft (F) wirkt.

10. Anschlussvorrichtung nach Anspruch 8 oder 9,
**dadurch gekennzeichnet, dass** dasMontageteil(18)zum Erzeugen der Vorspannkraft (F) federelastische Armabschnitte (42) aufweist.

11. Anschlussvorrichtung nach einem der Ansprüche 1 bis 10,
**gekennzeichnet durch** eine Ausgestaltung zur gegen Verdrehen gesicherten Anordnung des Montageteils (18) in der Durchführöffnung (2) des Wandungselementes (4).

12. Anschlussvorrichtung nach Anspruch 11,
**dadurch gekennzeichnet, dass** dasMontageteil(18)aufderin Einsetzrichtung weisenden Seite des Anlageelementes (14) einen Eingriffabschnitt (44) in Anpassung an die, eine von der Kreisform abweichende, insbesondere als regelmäßiges Polygon ausgebildete Form aufweisende Durchführöffnung (2) aufweist.

13. Anschlussvorrichtung nach einem der Ansprüche 1 bis 12,
**dadurch gekennzeichnet, dass** dasMontageteil(18)auseinem Formteil aus insbesondere faserverstärktem Kunststoff besteht.

14. Anschlussvorrichtung nach einem der Ansprüche 1 bis 13,
**dadurch gekennzeichnet, dass** dasVerbinderteil(20)aus Kunststoff oder Metall, insbesondere Messing, besteht.

15. Anschlussvorrichtung nach einem der Ansprüche 1 bis 14,
**dadurch gekennzeichnet, dass** dasVerbinderteil(20)im Bereich jedes Anschlussabschnittes (10, 12) mindestens einen Leitungsanschluss (46) aufweist, wobei vorzugsweise mindestens einer der Leitungsanschlüsse (46) als Dom zum Aufstecken einer Leitung (6) ausgebildet ist.

16. Anschlussvorrichtung nach Anspruch 15,
**dadurch gekennzeichnet, dass** mindestens einer der Leitungsanschlüsse (46) als Bestandteil einer Steckverbindung, und zwar insbesondere als Aufnahmemuffe zum Einstecken eines leitungsseitigen Steckerteils ausgebildet ist.

17. Anschlussvorrichtung nach einem der Ansprüche 1 bis 16,
**gekennzeichnet durch** eine Ausgestaltung als Wartungsanschluss, insbesondere Prüfanschluss zur Druckmessung, wobei einer der Anschlussabschnitte (10) zum bedarfsweisen Anschluss einer Wartungsleitung ausgebildet ist, und wobei zwischen den Anschlussabschnitten (10, 12) innerhalb des Verbinderteils (20) ein Rückschlagventil (50) angeordnet ist.

18. Anschlussvorrichtung nach einem der Ansprüche 1 bis 16,
**gekennzeichnet durch** eine Ausgestaltung als Durchgangsverbinder, wobei das Verbinderteil (20) zwei gegenüberliegende Leitungsanschlüsse (46) und einen diese ständig verbindenden, inneren Kanal aufweist.

19. Anschlussvorrichtung nach einem der Ansprüche 15 bis 18,
**dadurch gekennzeichnet, dass** derLeitungsanschluss(46)des zweiten Anschlussabschnittes (12) des Verbinderteils (20) bereichsweise derart versenkt innerhalb der Aufnahmeöffnung (24) des Montageteils (18) liegt, dass im montiert in der Durchführöffnung (2) gehalterten Zustand des Anschlussteils (8) von der gegenüberliegenden Seite des Wandungselementes (4) her durch mindestens eine seitliche Sichtöffnung (62) des Montageteils (18) hindurch zumindest ein Fußbereich dieses Leitungsanschlusses (46) sichtbar ist.

20. Anschlussvorrichtung nach einem der Ansprüche 1 bis 19,
**dadurch gekennzeichnet, dass** dasMontageteil(18)einden zweiten Anschlussabschnitt (12) des Verbinderteils (20) wandungsartig mit seitlichem Abstand umschließendes Schutzelement (64) aufweist.

21. Anschlussvorrichtung nach einem der Ansprüche 1 bis 20,
**dadurch gekennzeichnet, dass** dasVerbinderteil(20) seinerseits nochmals in mindestens zwei Einzelteile (20a, 20b) geteilt ist, die miteinander insbesondere über eine Steckverbindung (66, 68) verbunden oder verbindbar sind.

22. Wandungselement (4) mit mindestens einer Durchführöffnung (2) zum Einsetzen einer Anschlussvorrichtung (1) nach einem der Ansprüche 1 bis 21,
**dadurch gekennzeichnet, dass** dieDurchführöffnung(2) bezüglich ihrer Größe und Form derart ausgestaltet ist, dass das Montageteil (18) mit den Rastmitteln (16) durch die Durchführöffnung (2) hindurch führbar ist, die Durchführöffnung (2) vorzugsweise eine von der Kreisform abweichende, insbesondere als regelmäßiges Polygon ausgebildete Form derart aufweist, dass der Eingriffabschnitt (44) des Montageteils (18) mit geringem Spiel einsetzbar und in eingesetztem Zustand gegen Verdrehen gesichert ist.

## Claims

1. Connection device (1) for a wall passage, in particular for arrangement in a through-opening (2) of a wall element (4) and for connection of at least one media conduit (6), comprising a connection part (8) having a first connection section (10), which is to be passed through the through-opening (2), and an oppositely located second connection section (12) having a bearing element (14) for insertion-limiting bearing against the wall element (4) and having retaining means (16) for locking the connection part (8) in its mounting position inserted in the through-opening (2),
**characterised in that** the connection part (8) comprises at least two separate parts, namely a mounting part (18), which can be fastened in the through-opening (2) of the wall element (4) via the retaining means (16), and a connector part (20), which can be connected to the mounting part (18) and has the connection sections (10, 12), the retaining means (16) being formed by latching means of the mounting part (18).

2. Connection device according to Claim 1,
**characterised in that** the connector part (20) can be plugged by a plug-in section (22) into a receiving opening (24) of the mounting part (18) and locked against release via retaining means (26).

3. Connection device according to Claim 2, **characterised in that** the connector part (20) has on its outer peripheral surface, as the retaining means (26), at least one toothed edge (32) which extends over the periphery and engages in an inner peripheral surface of the receiving opening (24) of the mounting part (18) in a force-locked and/or form-locked manner.

4. Connection device according to one of Claims 1 to 3,
**characterised in that** the latching means, forming the retaining means (16), of the mounting part (18) can be passed through the through-opening (2) in such a manner that they automatically engage in a latching manner behind the wall element (4) for the purpose of locking.

5. Connection device according to one of Claims 1 to 4,
**characterised in that** the latching means of the mounting part (18) comprise at least two elastic latching arms (34) which are preferably constructed in the manner of barbs such that they are moved elastically inwards when they are inserted into and passed through the through-opening (2) and subsequently spring back outwards with their free ends pointing opposite the insertion direction and thereby engage in a latching manner behind the wall element (4) on its side located opposite the bearing element (14).

6. Connection device according to one of Claims 1 to 5,
**characterised by** securing means for fixing the latching means (16) against a releasing movement.

7. Connection device according to Claim 5 and 6, **characterised in that** the latching arms (34) have at their free ends, as securing means, in each case a groove- or channel-like contour (36) for the latching interaction with a marginal edge (38) of the through-opening (2) for the purpose of providing support in the axial and radial direction.

8. Connection device according to one of Claims 1 to 7,
**characterised by** pretensioning means for generating a pretensioning force (F) acting axially between the wall element (4) and the mounting part (18) opposite the insertion direction.

9. Connection device according to one of Claims 1 to 8,
**characterised by** an elastic seal (40) for sealing contact in the region between the bearing element (14) and the wall element (4), the seal (40) preferably acting also as pretensioning means for generating the pretensioning force (F).

10. Connection device according to Claim 8 or 9, **characterised in that** the mounting part (18) has spring-elastic arm sections (42) for generating the pretensioning force (F).

11. Connection device according to one of Claims 1 to 10,
**characterised by** a configuration for the arrangement of the mounting part (18) in the through-opening (2) of the wall element (4) such that it is locked against rotation.

12. Connection device according to Claim 11, **characterised in that** the mounting part (18) has, on the side of the bearing element (14) pointing in the insertion direction, an engagement section (44) adapted to the through-opening (2), which has a shape deviating from the circular shape and in particular in the form of a regular polygon.

13. Connection device according to one of Claims 1 to 12,
**characterised in that** the mounting part (18) is composed of a moulded part made, in particular, of fibre-reinforced plastic.

14. Connection device according to one of Claims 1 to 13,
**characterised in that** the connector part (20) is made of plastic or metal, in particular brass.

15. Connection device according to one of Claims 1 to 14,
**characterised in that** the connector part (20) has at least one conduit connection (46) in the region of each connection section (10, 12), preferably at least one of the conduit connections (46) being constructed as a mandrel for plugging on a conduit (6).

16. Connection device according to Claim 15, **characterised in that** at least one of the conduit connections (46) is constructed as a component of a plug-in connection, in particular as a receiving bushing for plugging in a plug part on the conduit.

17. Connection device according to one of Claims 1 to 16,
**characterised by** a configuration as a maintenance connection, in particular a test connection for pressure measurement, one of the connection sections (10) being constructed for the connection of a maintenance conduit as required, and a check valve (50) being arranged between the connection sections (10, 12) within the connector part (20).

18. Connection device according to one of Claims 1 to 16,
**characterised by** a configuration as a through-connector, the connector part (20) having two oppositely located conduit connections (46) and an inner passage which permanently connects them.

19. Connection device according to one of Claims 15 to 18,
**characterised in that** the conduit connection (46) of the second connection section (12) of the connector part (20) is in certain regions recessed within the receiving opening (24) of the mounting part (18) in such a manner that when the connection part (8) is in the retained state mounted in the through-opening (2), from the opposite side of the wall element (4) through at least one lateral inspection opening (62) of the mounting part (18) at least a bottom region of this conduit connection (46) is visible.

20. Connection device according to one of Claims 1 to 19,
**characterised in that** the mounting part (18) has a protective element (64) which encloses the second connection section (12) of the connector part (20) in a wall-like manner with a lateral spacing.

21. Connection device according to one of Claims 1 to 20,
**characterised in that** the connector part (20) is for its part further divided into at least two individual parts (20a, 20b) which are connected or connectible to each other in particular via a plug-in connection (66, 68).

22. Wall element (4) having at least one through-opening (2) for the insertion of a connection device (1) according to one of Claims 1 to 21,
**characterised in that** the through-opening (2) is configured with regard to its size and shape in such a manner that the mounting part (18) with the latching means (16) can be passed through the through-opening (2), the through-opening (2) preferably has a shape deviating from the circular shape and in particular in the form of a regular polygon, such that the engagement section (44) of the mounting part (18) can be inserted with little play and is locked in the inserted state against rotation.

## Revendications

1. Dispositif de raccordement (1) pour une traversée de cloison, destiné en particulier à être agencé dans une ouverture traversante (2) d'un élément de cloison (4) et à raccorder au moins un conduit de fluides (6), constitué d'une pièce de raccordement (8) avec une première section de raccordement (10) à guider à travers l'ouverture traversante (2) et une deuxième section de raccordement (12) opposée avec un élément d'appui (14) pour l'application limitant l'insertion sur l'élément de cloison (4) ainsi qu'avec des moyens de retenue (16) pour le blocage de la pièce de raccordement (8) dans sa position de montage insérée dans l'ouverture traversante (2),
**caractérisé en ce que** la pièce de raccordement (8) se compose d'au moins deux éléments séparés, à savoir une pièce de montage (18) qui peut être fixée dans l'ouverture traversante (2) de l'élément de cloison (4) par le biais des moyens de retenue (16) et une pièce de connexion (20) présentant les sections de raccordement (10, 12) et pouvant être reliée à la pièce de montage (18), les moyens de retenue (16) étant formés par des moyens d'encliquetage de la pièce de montage (18).

2. Dispositif de raccordement selon la revendication 1,
**caractérisé en ce que** la pièce de connexion (20) peut être enfichée avec une section d'enfichage (22) dans une ouverture de réception (24) de la pièce de montage (18) et peut être bloquée contre la libération par le biais de moyens de retenue (26).

3. Dispositif de raccordement selon la revendication 2,
**caractérisé en ce que** la pièce de connexion (20) présente sur sa surface périphérique extérieure comme moyen de retenue (26) au moins un bord muni de dents (32) s'étendant sur la périphérie et venant en prise par force et/ou par complémentarité de forme dans une surface périphérique intérieure de l'ouverture de réception (24) de la pièce de montage (18).

4. Dispositif de raccordement selon l'une quelconque des revendications 1 à 3, caractérisé ce que les moyens d'encliquetage de la pièce de montage (18) formant les moyens de retenue (16) peuvent être guidés à travers l'ouverture traversante (2) de telle manière qu'ils viennent en prise par enclenchement automatique derrière l'élément de cloison (4) pour le bloquer.

5. Dispositif de raccordement selon l'une quelconque des revendications 1 à 4, **caractérisé en ce que** les moyens d'encliquetage de la pièce de montage (18) se composent d'au moins deux bras d'encliquetage (34) élastiques qui sont réalisés de préférence à la manière de barbelures, de telle sorte qu'ils sont déplacés élastiquement vers l'intérieur lors de l'insertion dans et de la traversée de l'ouverture traversante (2) puis reviennent comme un ressort vers l'extérieur avec leurs extrémités libres, tournées dans le sens opposé au sens d'insertion et viennent ainsi en prise par enclenchement derrière l'élément de cloison (4) sur son côté opposé à l'élément d'appui (14).

6. Dispositif de raccordement selon l'une quelconque des revendications 1 à 5, **caractérisé par** des moyens de blocage permettant de fixer les moyens de retenue (16) contre un mouvement de libération.

7. Dispositif de raccordement selon les revendications 5 et 6,
**caractérisé en ce que** les bras d'encliquetage (34) présentent comme moyen de blocage à leurs extrémités libres respectivement un contour (36) en forme de rainure ou de cannelure pour la coopération par enclenchement avec une arête de bord (38) de l'ouverture traversante (2) à des fins d'appui dans la direction axiale et radiale.

8. Dispositif de raccordement selon l'une quelconque des revendications 1 à 7, **caractérisé par** des moyens de précontrainte permettant de générer une force de précontrainte (F) agissant axialement entre l'élément de cloison (4) et la pièce de montage (18) dans le sens opposé au sens d'insertion.

9. Dispositif de raccordement selon l'une quelconque des revendications 1 à 8, **caractérisé par** un joint élastique (40) pour l'application étanche dans la zone entre l'élément d'appui (14) et l'élément de cloison (4), le joint (40) agissant de préférence aussi comme moyen de précontrainte pour générer la force de précontrainte (F).

10. Dispositif de raccordement selon la revendication 8 ou 9,
**caractérisé en ce que** la pièce de montage (18) présente des sections de bras (42) faisant ressort pour générer la force de précontrainte (F).

11. Dispositif de raccordement selon l'une quelconque des revendications 1 à 10, **caractérisé par** une configuration permettant d'agencer la pièce de montage (18) sans possibilité la rotation dans l'ouverture traversante (2) de l'élément de cloison (4).

12. Dispositif de raccordement selon la revendication 11,
**caractérisé en ce que** la pièce de montage (18) présente du côté de l'élément d'appui (14) tourné dans le sens d'insertion, une section de prise (44) en adaptation à l'ouverture traversante (2) présentant une forme divergeant de la forme circulaire, réalisée en particulier sous forme de polygone régulier.

13. Dispositif de raccordement selon l'une quelconque des revendications 1 à 12, **caractérisé en ce que** la pièce de montage (18) se compose d'une pièce moulée en plastique en particulier renforcé par des fibres.

14. Dispositif de raccordement selon l'une quelconque des revendications 1 à 13, **caractérisé en ce que** la pièce de connexion (20) est en plastique ou en métal, en particulier en laiton.

15. Dispositif de raccordement selon l'une quelconque des revendications 1 à 14, **caractérisé en ce que** la pièce de connexion (20) présente dans la zone de chaque section de raccordement (10, 12) au moins un raccord de conduit (46), dans lequel au moins un des raccords de conduit (46) est réalisé de préférence sous forme de broche pour l'enfichage d'un conduit (6).

16. Dispositif de raccordement selon la revendication 15,
**caractérisé en ce qu'**au moins un des raccords de conduit (46) est réalisé comme partie intégrante d'une liaison par enfichage et en particulier comme manchon de réception pour l'enfichage d'un élément connecteur côté conduit.

17. Dispositif de raccordement selon l'une quelconque des revendications 1 à 16, **caractérisé par** une configuration sous forme de raccord de maintenance, en particulier raccord de contrôle pour la mesure de la pression, une des sections de raccordement (10) étant réalisée pour raccorder un conduit de maintenance en fonction des besoins et un clapet antiretour (50) étant disposé entre les sections de raccordement (10, 12) à l'intérieur de la pièce de connexion (20).

18. Dispositif de raccordement selon l'une quelconque des revendications 1 à 16, **caractérisé par** une configuration sous forme de connecteur de traversée, la pièce de connexion (20) présentant deux raccords de conduit (46) opposés et un canal intérieur les reliant en permanence.

19. Dispositif de raccordement selon l'une quelconque des revendications 15 à 18,
**caractérisé en ce que** le raccord de conduit (46) de la deuxième section de raccordement (12) de la pièce de connexion (20) est noyé par section à l'intérieur de l'ouverture de réception (24) de la pièce de montage (18) de telle sorte que lorsque la pièce de raccordement (8) est à l'état maintenu monté dans l'ouverture traversante (2) au moins une zone de base de ce raccord de conduit (46) est visible depuis le côté opposé de l'élément de cloison (4) à travers au moins un regard latéral (62) de la pièce de montage (18).

20. Dispositif de raccordement selon l'une quelconque des revendications 1 à 19, **caractérisé en ce que** la pièce de montage (18) présente un élément de protection (64) entourant à une distance latérale la deuxième section de raccordement (12) de la pièce de connexion (20) à la manière d'une cloison.

21. Dispositif de raccordement selon l'une quelconque des revendications 1 à 20, **caractérisé en ce que** de son côté la pièce de connexion (20) est divisée encore une fois en au moins deux pièces constitutives (20a, 20b) qui sont reliées ou peuvent être reliées l'une à l'autre en particulier par le biais d'une liaison par enfichage (66, 68).

22. Elément de cloison (4) avec au moins une ouverture traversante (2) pour l'insertion d'un dispositif de raccordement (1) selon l'une quelconque des revendications 1 à 21,
**caractérisé en ce que** l'ouverture traversante (2) est réalisée en ce qui concerne sa taille et sa forme de telle sorte que la pièce de montage (18) peut être guidée avec les moyens de retenue (16) à travers l'ouverture traversante (2), l'ouverture traversante (2) présente de préférence une forme divergeant de la forme circulaire, réalisée en particulier sous forme de polygone régulier de telle sorte que la section de prise (44) de la pièce de montage (18) peut être insérée avec peu de jeu et est bloquée contre la rotation à l'état inséré.
